# EUROPÄISCHE PATENTSCHRIFT

(11) **EP 4 463 573 B1**
(45) Veröffentlichungstag und Bekanntmachung des Hinweises auf die Patenterteilung: **18.02.2026**
(21) Anmeldenummer: 23701191.1
(22) Anmeldetag: 11.01.2023
(51) Int. Cl.: C21B 3/06, C21B 3/08, C22B 7/00, C22B 7/04

(54) **VERFAHREN ZUM ABTRENNEN VON EISENOXID AUS EISENOXID-HALTIGEN UND PHOSPHAT-HALTIGEN SCHLACKENSCHMELZEN**
PROCESS FOR SEPARATING IRON OXIDE FROM IRON OXIDE-CONTAINING AND PHOSPHATE-CONTAINING SLAG MELTS
PROCÉDÉ DE SÉPARATION D'OXYDE DE FER HORS DE LAITIERS À L'ÉTAT FONDU CONTENANT DE L'OXYDE DE FER ET CONTENANT DU PHOSPHATE

(30) Priorität: 14.01.2022 AT 112022
(43) Veröffentlichungstag der Anmeldung: 20.11.2024
(73) Patentinhaber: Radmat AG, 5442 Fislisbach (CH)
(72) Erfinder: EDLINGER, Alfred, 6781 Bartholomäberg (AT)
(74) Vertreter: SONN Patentanwälte GmbH & Co KG
(86) Internationale Anmeldenummer: PCT/IB2023/050250
(87) Internationale Veröffentlichungsnummer: WO 2023/135530

(56) Entgegenhaltungen:
- WO-A1-2007/145384
- WO-A1-2018/014363
- CN-A- 106 755 658

## Beschreibung

Die vorliegende Erfindung betrifft ein Verfahren zum Abtrennen von Eisenoxid aus Eisenoxid-haltigen und Phosphat-haltigen Schlackenschmelzen.

Eisenoxid-haltige und Phosphat-haltige Schlacken und Schlackenschmelzen werden überall dort erhalten, wo Eisen und Phosphorverbindungen bei hohen Temperaturen oxidiert werden. Ein technischer Prozess, bei dem große Mengen an derartigen Schlacken auftreten, ist die Verbrennung von Klärschlamm beziehungsweise Trockenklärschlamm, um Schadstoffkomponenten im Klärschlamm wie beispielsweise Mikroplastik, Hormone, Medikamentenreste, Schwermetalle wie Zink, Kupfer, Blei, Chrom, Quecksilber, sowie organische und anorganische Halogenverbindungen unschädlich zu machen. Die Verbrennung des Klärschlammes erfolgt hauptsächlich in der Wirbelschicht bei ungefähr 850°C, wobei sich ein bedeutender Teil vor allem der anorganischen Schadstoff-Fracht in der Wirbelschichtasche anreichert. Die nach der Verbrennung zurückbleibende Schlacke enthält zum einen Phosphate aus den verschiedensten organischen Abfallstoffen, die in Kläranlagen entsorgt werden, und zum anderen relativ große Mengen an Eisen, welches dem zu klärenden Abwasser zur Fällung eben dieser Phosphate zugegeben wird. Eisenoxid-haltige und Phosphat-haltige Schlacken und Schlackenschmelzen werden jedoch beispielsweise auch bei der thermischen Entsorgung von Tiermehl, Gülle, Lebensmittelresten, Altmedikamenten, flammhemmend ausgerüsteten Textilien und Kunststoffen, Phosphor-haltigen Schmiermitteln, aus Stahlwerksrückständen, Lithium-Ionen-Batterien, Stäuben aus der Zementklinkerproduktion und aus Phosphat-haltigen Eisenerzen erhalten. Darüber hinaus können Eisenoxid-haltige und Phosphat-haltige Schlacken auch Chromoxide (Chromate) und Titandioxid (TiO₂) enthalten. Chromoxide fallen insbesondere bei der Verhüttung von Phosphat-haltigen Eisenerzen in Phosphat-, Eisenoxid- und Chromat-haltigen Schlacken an (Thomas-Mehl). Die Patentdokumente WO 2018/014363 A1, WO 2007/145384 A1 und CN 106 755 658 A offenbaren außerdem ein Verfahren zum abtrennen von Eisenoxid-Haltigen und Phosphate-Haltigen Schlackenschmelzen.

Grundsätzlich wäre es wünschenswert, Phosphat insbesondere aus Klärschlamm als Dünger einzusetzen, da sich im Klärschlamm neben Phosphat auch bedeutende Mengen an anderen wertvollen Düngemittelkomponenten wie Ammoniak, Kaliumchlorid, Kalk, Silikate, Aluminate und Magnesiumverbindungen finden. Phosphat und Eisenoxide haben jedoch eine überaus hohe Affinität zueinander und die Phosphate dadurch eine sehr geringe Pflanzenverfügbarkeit, sodass Phosphat aus der Schlacke des Klärschlamms für die Düngemittelproduktion kaum nützlich ist. Thomas-Mehl ist aufgrund des giftigen Chromoxid-Anteils als Dünger nicht einsetzbar. Die Entfernung des Eisen-Anteils zusammen mit dem Chrom-Anteil könnte daher große Mengen an wertvollem Dünger bereitstellen.

Es ist daher Aufgabe der vorliegenden Erfindung, ein Verfahren anzugeben, mit dem Eisenoxide und gegebenenfalls Chromoxide (Chromate) aus Eisenoxid-haltigen und Phosphat-haltigen Schlackenschmelzen abgetrennt werden können. Die eisenfreie und chromatfreie Phosphatschlacke soll auf diese Weise für die Produktion eines Phosphatdüngemittels in guter Pflanzenverfügbarkeit zur Verfügung stehen oder zur Gewinnung von elementarem Phosphor genutzt werden.

Zur Lösung dieser Aufgabe umfasst ein Verfahren der eingangs genannten Art erfindungsgemäß die folgenden Schritte:
Bereitstellen einer Eisenoxid-haltigen und Phosphat-haltigen Schlackenschmelze in einer Schmelzpfanne,
Abkühlen der Eisenoxid-haltigen und Phosphat-haltigen Schlackenschmelze unter oxidierenden Bedingungen zur Bildung von festem Magnetit, insbesondere von Magnetit in Spinellkonfiguration, wobei das Abkühlen dergestalt geregelt wird, dass ein Temperaturbereich von 1600°C bis 1420°C über einen Zeitraum von 5 Minuten bis 25 Minuten, bevorzugt 10 Minuten bis 20 Minuten und besonders bevorzugt 15 Minuten durchschritten wird,
Abtrennen des beim Schritt des Abkühlens gebildeten, festen Magnetits von der Phosphat-haltigen Schlacke.

Mit dem erfindungsgemäßen Verfahren erfolgt die Abtrennung des Eisens unter für Phosphor oxidierenden Verbindungen, sodass Phosphat in der oxidischen Schlacke erhalten bleibt. Durch das langsame Abkühlen der Eisenoxid-haltigen und Phosphat-haltigen Schlackenschmelze in der Schmelzpfanne gelingt es, das Eisenoxid und gegebenenfalls Chromoxid (Chromat) selektiv als gegebenenfalls Chrom-enthaltenden Magnetit insbesondere in der Spinellkonfiguration zu kristallisieren. Auch TiO₂ wird in den Magnetit eingebaut und dadurch quantitativ aus der Schlackenphase entfernt. Ein rascheres Abkühlen als bei dem erfindungsgemäßen Verfahren würde die Magnetitbildung beziehungsweise Spinellbildung nicht gestatten und zu den genannten Eisenoxid-Phosphat-Modifikationen führen, die eine sehr geringe Pflanzenverfügbarkeit aufweisen.

Da der Magnetit bei dem erfindungsgemäßen Verfahren auskristallisiert, wird eine Phasentrennung mit bekannten Verfahren ermöglicht und es kann eine eisenfreie Phoshathaltige Schlacke erhalten werden, die herausragende Düngemitteleigenschaften aufweist.

Im Sinne der vorliegenden Erfindung ist als eine Schmelzpfanne jegliches metallurgisches Gefäß anzusehen, in dem Eisenoxid-haltige und Phosphat-haltige Schlackenschmelzen über einen ausreichend langen Zeitraum gehalten und kontrolliert durch den definierten Temperaturbereich von 1600°C bis 1420°C abgekühlt werden können, welcher Temperaturbereich den Übergang vom Liquiduszustand zum Soliduszustand von Magnetit darstellt.

Es hat sich bei Versuchen gezeigt, dass der Erfolg der Magnetitbildung beziehungsweise Spinellbildung unter anderem von der Basizität (CaO/SiO₂) der Schlackenschmelze abhängt, wobei das Verhältnis CaO/SiO₂ das Massenverhältnis von CaO zu SiO₂ angibt. Das Abkühlen wird im Rahmen der vorliegenden Erfindung daher bevorzugt bei einer Basizität (CaO/SiO₂)von 0,5 bis 1,2 durchgeführt. Bei diesen Basizitäten konnte eine rasche und selektive Magnetitbildung in der Spinellkonfiguration beobachtet werden.

Um die Kinetik der Kristallisation trotz des relativ langsamen Abkühlens der Schlackenschmelze positiv zu beeinflussen, kann das erfindungsgemäße Verfahren bevorzugt dahingehend ausgestaltet werden, dass der Eisenoxid-haltigen und Phosphat-haltigen Schlackenschmelze Eisenoxidträger als Kristallisationskeime für das Kristallwachstum des Eisenoxids in der Schlackenschmelze zu festem Magnetit zugegeben werden. An den Kristallisationskeimen bildet sich bevorzugt Wüstit (FeOₓ) und Hämatit (Fe₂O₃), aus welchen Eisenoxiden sich in der Folge Magnetit (Fe²⁺(Fe³⁺)₂O₄) bildet. Aufgrund des langsamen Abkühlens durch den definierten Temperaturbereich nimmt die Magnetit-Kristallgröße signifikant zu.

Gemäß einer bevorzugten Ausführungsform der vorliegenden Erfindung wird das Verfahren hinsichtlich des Abkühlens so durchgeführt, dass das Abkühlen der Eisenoxid-haltigen und Phosphat-haltigen Schlackenschmelze durch Einbringen eines Kühlgases, insbesondere eines Sauerstoff-haltigen Kühlgases, insbesondere Luft, CO₂, Wasserdampf und/oder O₂ erfolgt. Der Einsatz eines Kühlgases gestattet die feinfühlige Regelung des Kühlvorgangs durch den genannten Temperaturbereich, und gestattet es bei der bevorzugten Verwendung von Sauerstoff-haltigen Gasen als Kühlgas weiters, bei der Abkühlung oxidierende Bedingungen aufrecht zu erhalten, um die Phosphate vor Komplexierungsreaktionen mit anderen Begleitstoffen der Schlackenschmelze zu bewahren. Die Verwendung von Wasserdampf im Gemisch mit O₂ ist hierbei als besonders effektiv zu betrachten. Wenn nur Wasserdampf als Kühlgas zum Einsatz gelangt, oxidiert dieser Fe und FeO unter Bildung von H₂ zu FeO und Fe₂O₃ und weiter zu Magnetit und fördert somit sowohl die Kühlung, die Bildung von H₂ als auch die Spinellbildung. Als Oxidationsmittel kann auch Hämatit (Fe₂O₃) eingebracht werden, welcher zusätzlich, wie oben beschrieben, als Kristallisationskeim dienen kann. Bei der Einbringung von staubförmigem Hämatit besteht zusätzlich die Möglichkeit, diesen durch induktives Rühren unter Ausnutzung der Lorentz-Kraft homogen in der Schlackenschmelze zu verteilen.

Bevorzugt wird das Kühlgas über eine Lanze in die Schlackenschmelze eingebracht. Alternativ oder zusätzlich kann es auch vorgesehen sein, dass das Kühlgas über einen Spülstein am oder im Boden der Schmelzpfanne in die Schlackenschmelze eingebracht wird, wie dies einer bevorzugten Ausführungsform der vorliegenden Erfindung entspricht. Das Einbringen des Kühlgases über einen Spülstein am oder im Boden der Schmelzpfanne bringt eine Vergleichmäßigung des Gasstroms durch die abzukühlende Schlackenschmelze mit sich und ist daher für die gleichmäßige Kristallisation des Spinells besonders günstig. Spinell hat unterhalb der Curie-Temperatur von 578°C ferromagnetische Eigenschaften und darüber paramagnetische Eigenschaften und kann somit elektrodynamisch, bewegt, homogenisiert beziehungsweise konzentriert werden.

Um den aus der Schlackenschmelze gebildeten Magnetit und somit den Eisenanteil von der Phosphatschlacke abzutrennen, kann in einfacher und daher bevorzugter Weise so vorgegangen werden, dass der Magnetit durch Sedimentation in der Schmelzpfanne von der Phosphat-haltigen Schlackenschmelze abgetrennt und die Phosphat-haltige Schlackenschmelze schmelzflüssig abgegossen wird. Hierbei verbleibt natürlich ein Teil der Phosphatschlacke in dem Magnetit, der diese wie ein Schwamm in sich aufnimmt, jedoch erfolgt zum einen keine chemische Verbindung mehr zwischen dem Magnetit-Spinell und der Phosphatschlacke und zum anderen setzt sich aufgrund eines deutlichen Dichteunterschieds zwischen der Phosphatschlacke (Dichte 2,2 Tonnen/m³) und dem Spinell (5,2 Tonnen/m³) der Spinell ab und die eisenfreie Phosphatschlacke kann problemlos aus dem Überstand abgezogen werden. Wenn die Menge des Magnetits in der Schmelzpfanne zu groß wird, um die Phosphatschlacke abzuschöpfen oder abzugießen, muss die Schmelzpfanne gänzlich abgegossen werden, woraufhin die Schlacke vom Spinell abrinnt.

Alternativ oder zusätzlich zur Sedimentation des Magnetits in der Form von Spinell kann das erfindungsgemäße Verfahren dergestalt weitergebildet sein, dass der Magnetit durch Sammeln an einem Magnetscheider oder in einem elektrodynamischen Feld von der Phosphat-haltigen Schlackenschmelze abgetrennt und die Phosphat-haltige Schlackenschmelze schmelzflüssig abgegossen wird, wie dies einer bevorzugten Ausführungsform der vorliegenden Erfindung entspricht. Der Einsatz eines Magnetscheiders gestattet eine schnellere Abtrennung des Spinells von der Phosphat-haltigen Schlacke (Phosphatschlacke) und steigert damit die Effizienz des erfindungsgemäßen Verfahrens.

Die bisher beschriebenen Aspekte des erfindungsgemäßen Verfahrens betreffen die Entfernung des Eisenanteils und gegebenenfalls des Chrom- und Titananteils aus Eisenoxid-haltigen und Phosphat-haltigen Schlackenschmelzen.

Die nun eisenfreie Phosphat-haltige Schlackenschmelze kann nun dergestalt weiterverarbeitet werden, dass die Phosphat-haltige Schlackenschmelze durch Einbringen eines Kühlgases zu Phosphat-haltiger Schlacke verfestigt wird, wobei bevorzugt das Kühlgas nach dem Abkühlen der Phosphat-haltigen Schlacke zum Abkühlen der Eisenoxid-haltigen und Phosphat-haltigen Schlackenschmelze eingesetzt wird. Die eisenfreie Schlackenschmelze wird somit weiter gekühlt und dadurch verfestigt. Die dabei erhaltene feste Schlacke ist eisenfrei und frei von Schadstoffen wie Schwermetallen und kann somit für die Herstellung von Düngemitteln verwendet werden. Das verwendete Kühlgas kann in energetisch günstiger Weise in dem vorangehenden Schritt des Abkühlens der Eisenoxid-haltigen und Phosphat-haltigen Schlackenschmelze verwendet werden, welches Abkühlen auf einem höheren Temperaturniveau erfolgt als das Abkühlen der eisenfreien Phosphatschlackenschmelze. Das verwendete Kühlgas kann jedoch auch als Verbrennungsluft in einem vorgelagerten Schmelzprozess eingesetzt werden, da das Kühlgas noch einen beträchtlichen Sauerstoffanteil beeinhaltet. Auf diese Weise kann das Kühlgas in einem vorgelagerten Schritt zum Bereitstellen der Eisenoxid-haltigen und Phosphat-haltigen Schlackenschmelze eingesetzt werden.

Alternativ oder zusätzlich kann zur Kühlung der eisenfreien Phosphatschlackenschmelze auch so vorgegangen werden, dass das Verfestigen der Phosphat-haltigen Schlackenschmelze als Sprühgranulation durchgeführt wird, wie dies einer bevorzugten Ausführungsform der vorliegenden Erfindung entspricht. Bei der Sprühgranulation kommt es zu einer bedeutenden Vergrößerung der spezifischen Oberfläche der dünnflüssigen Phosphatschlacke, sodass eine rasche Abkühlung erzielt wird. Dabei können unter Umständen Granulate erhalten werden, die direkt als Dünger einsetzbar sind.

Wenn jedoch die eisenfreie Phosphat-haltige Schlacke nicht feinkörnig genug vorliegt, beziehungsweise wenn zu befürchten ist, dass in der verfestigten Schlacke noch ein Eisenanteil enthalten ist, kann das Verfahren gemäß einer bevorzugten Ausführungsform der vorliegenden Erfindung dergestalt weitergebildet sein, dass die Phosphat-haltige Schlacke gemahlen und gegebenenfalls noch darin vorhandener Magnetit an einem Magnetscheider abgetrennt wird. Die verfestigte Schlacke splittert beim Mahlen von dem Magnetit ab und gibt diesen dadurch vollständig frei. Dies ermöglicht die magnetische Abscheidung eventuell noch vorhandenen Spinell-Magnetits aus der Schlacke. Aufgrund des Dichteunterschieds kommt auch die Spinellentfernung durch Sichtung in Frage.

Um die Düngeeigenschaften der so erhaltenen eisenfreien Phosphatschlacke noch zu steigern, kann das Verfahren gemäß einer bevorzugten Ausführungsform der vorliegenden Erfindung noch dahingehend erweitert werden, dass die Phosphat-haltige Schlacke bei Temperaturen zwischen 100°C und 200°C mit Säure besprüht wird, bevorzugt ausgewählt aus der Gruppe bestehend aus Phosphorsäure, Schwefelsäure und Salpetersäure. Dadurch werden die Anionen dieser Säuren an die Schlacke gebunden und können als Dünger in den Boden gelangen.

Wenn die Nutzung des Phosphats als Dünger nicht von Interesse ist, kann es gemäß einer alternativen Ausführungsform der vorliegenden Erfindung auch vorgesehen sein, dass die Phosphat-haltige Schlackenschmelze zur Bildung von P₂ reduziert und der Schlackenanteil verglast und granuliert wird. Diese Reduktion kann carbothermisch durch Reduktion der Schlacke mit Kohlenstoffträgern erfolgen oder schmelzmetallurgisch durch Zugabe von Metallen, die unedler als Phosphor sind. Solch ein Metall ist beispielsweise Aluminium, welches in der Phosphat-haltigen Schlackenschmelze in einer Redoxreaktion durch Phosphat zu Aluminiumoxid oxidiert wird, wobei das Phosphat zu elementarem Phosphor in Form von gasförmigem P₂ reduziert wird. Das P₂ kann abgezogen und die verfestigte Schlacke, die nun kaum noch Phosphor und somit nur noch die anfangs genannten Komponenten Kalk, Silikate, Aluminate, Magnesiumverbindungen und dergleichen enthält, kann verglast und als amorpher, hydraulischer Zuschlagstoff in der Zementindustrie Verwendung finden. Alternativ kann das Phosphat der Phosphat-haltigen Schlackenschmelze elektrolytisch reduziert werden, wobei wiederum gasförmiges P₂ und Schlacke erhalten wird, die in der Zementindustrie verwertet werden kann.

## Patentansprüche

1. Verfahren zum Abtrennen von Eisenoxid aus Eisenoxid-haltigen und Phosphat-haltigen Schlackenschmelzen umfassend die folgenden Schritte:
Bereitstellen einer Eisenoxid-haltigen und Phosphat-haltigen Schlackenschmelze in einer Schmelzpfanne,
Abkühlen der Eisenoxid-haltigen und Phosphat-haltigen Schlackenschmelze unter oxidierenden Bedingungen zur Bildung von festem Magnetit, insbesondere von Magnetit in Spinellkonfiguration, wobei das Abkühlen dergestalt geregelt wird, dass ein Temperaturbereich von 1600°C bis 1420°C über einen Zeitraum von 5 Minuten bis 25 Minuten, bevorzugt 10 Minuten bis 20 Minuten und besonders bevorzugt 15 Minuten durchschritten wird,
Abtrennen des beim Schritt des Abkühlens gebildeten, festen Magnetits von der Phosphat-haltigen Schlacke.

2. Verfahren nach Anspruch 1, **dadurch gekennzeichnet, dass** das Abkühlen bei einer Basizität (CaO/SiO₂) von 0,5 bis 1,2 durchgeführt wird.

3. Verfahren nach Anspruch 1 oder 2, **dadurch gekennzeichnet, dass** der Eisenoxid-haltigen und Phosphat-haltigen Schlackenschmelze Eisenoxidträger als Kristallisationskeime für die Verfestigung des Eisenoxids in der Schlackenschmelze zu festem Magnetit zugegeben werden.

4. Verfahren nach Anspruch 1, 2 oder 3, **dadurch gekennzeichnet, dass** das Abkühlen der Eisenoxid-haltigen und Phosphat-haltigen Schlackenschmelze durch Einbringen eines Kühlgases, insbesondere eines Sauerstoff-haltigen Kühlgases, insbesondere Luft, CO₂, Wasserdampf und/oder O₂ erfolgt.

5. Verfahren nach Anspruch 4, **dadurch gekennzeichnet, dass** das Kühlgas über eine Lanze in die Schlackenschmelze eingebracht wird.

6. Verfahren nach Anspruch 4 oder 5, **dadurch gekennzeichnet, dass** das Kühlgas über einen Spülstein am oder im Boden der Schmelzpfanne in die Schlackenschmelze eingebracht wird.

7. Verfahren nach einem der Ansprüche 1 bis 6, **dadurch gekennzeichnet, dass** der Magnetit durch Sedimentation in der Schmelzpfanne von der Phosphat-haltigen Schlackenschmelze abgetrennt und die Phosphat-haltige Schlackenschmelze schmelzflüssig abgegossen wird.

8. Verfahren nach einem der Ansprüche 1 bis 7, **dadurch gekennzeichnet, dass** der Magnetit durch Sammeln an einem Magnetscheider von der Phosphat-haltigen Schlackenschmelze abgetrennt und die Phosphat-haltige Schlackenschmelze schmelzflüssig abgegossen wird.

9. Verfahren nach einem der Ansprüche 1 bis 8, **dadurch gekennzeichnet, dass** die Phosphat-haltige Schlackenschmelze durch Einbringen eines Kühlgases zu Phosphat-haltiger Schlacke verfestigt wird, wobei bevorzugt das Kühlgas nach dem Abkühlen der Phosphat-haltigen Schlacke zum Abkühlen der Eisenoxid-haltigen und Phosphat-haltigen Schlackenschmelze und/oder zum Bereitstellen der Eisenoxid-haltigen und Phosphat-haltigen Schlackenschmelze eingesetzt wird.

10. Verfahren nach Anspruch 9, **dadurch gekennzeichnet, dass** das Verfestigen der Phosphat-haltigen Schlackenschmelze als Sprühgranulation durchgeführt wird.

11. Verfahren nach Anspruch 9 oder 10, **dadurch gekennzeichnet, dass** die Phosphat-haltige Schlacke gemahlen und gegebenenfalls noch darin vorhandener Magnetit an einem Magnetscheider abgetrennt wird.

12. Verfahren nach Anspruch 9, 10 oder 11, **dadurch gekennzeichnet, dass** die Phosphat-haltige Schlacke bei Temperaturen zwischen 100°C und 200°C mit Säure besprüht wird, bevorzugt ausgewählt aus der Gruppe bestehend aus Phosphorsäure, Schwefelsäure und Salpetersäure.

13. Verfahren nach einem der Ansprüche 1 bis 8, **dadurch gekennzeichnet, dass** die Phosphat-haltige Schlackenschmelze zur Bildung von P₂ reduziert und der Schlackenanteil verglast und granuliert wird.

## Claims

1. Method for separating iron oxide from iron oxide-containing and phosphate-containing slag melts comprising the following steps:
providing an iron oxide-containing and phosphate-containing slag melt in a melting ladle,
cooling the iron oxide-containing and phosphate-containing slag melt under oxidizing conditions to form solid magnetite, in particular magnetite in spinel configuration, wherein the cooling is controlled in such a manner that a temperature range from 1600°C to 1420°C is traversed over a period of 5 minutes to 25 minutes, preferably 10 minutes to 20 minutes and particularly preferably 15 minutes,
separating the solid magnetite formed during the cooling step from the phosphate-containing slag.

2. Method according to claim 1, **characterized in that** the cooling is carried out at a basicity (CaO/SiO₂) of 0.5 to 1.2.

3. Method according to claim 1 or 2, **characterized in that** iron oxide carriers are added to the iron oxide-containing and phosphate-containing slag melt as nucleation seeds for the solidification of the iron oxide in the slag melt to solid magnetite.

4. Method according to claim 1, 2 or 3, **characterized in that** the cooling of the iron oxide-containing and phosphate-containing slag melt is performed by introducing a cooling gas, in particular an oxygen-containing cooling gas, in particular air, CO₂, water vapor and/or O₂.

5. Method according to claim 4, **characterized in that** the cooling gas is introduced into the slag melt via a lance.

6. Method according to claim 4 or 5, **characterized in that** the cooling gas is introduced into the slag melt via a purging plug at or in the bottom of the melting ladle.

7. Method according to any one of claims 1 to 6, **characterized in that** the magnetite is separated from the phosphate-containing slag melt by sedimentation in the melting ladle and the phosphate-containing slag melt is poured off in molten state.

8. Method according to any one of claims 1 to 7, **characterized in that** the magnetite is separated from the phosphate-containing slag melt by collection on a magnetic separator and the phosphate-containing slag melt is poured off in molten state.

9. Method according to any one of claims 1 to 8, **characterized in that** the phosphate-containing slag melt is solidified to phosphate-containing slag by introducing a cooling gas, wherein preferably the cooling gas, after cooling the phosphate-containing slag, is used for cooling the iron oxide-containing and phosphate-containing slag melt and/or for providing the iron oxide-containing and phosphate-containing slag melt.

10. Method according to claim 9, **characterized in that** the solidification of the phosphate-containing slag melt is carried out as spray granulation.

11. Method according to claim 9 or 10, **characterized in that** the phosphate-containing slag is ground and, if necessary, any magnetite still present therein is separated on a magnetic separator.

12. Method according to claim 9, 10 or 11, **characterized in that** the phosphate-containing slag is sprayed with acid at temperatures between 100 °C and 200 °C, preferably selected from the group consisting of phosphoric acid, sulfuric acid and nitric acid.

13. Method according to any one of claims 1 to 8, **characterized in that** the phosphate-containing slag melt is reduced to form P₂ and the slag fraction is vitrified and granulated.

## Revendications

1. Procédé de séparation d'oxyde de fer à partir de scories fondues contenant de l'oxyde de fer et du phosphate comprenant les étapes suivantes:
mise à disposition d'une scorie fondue contenant de l'oxyde de fer et du phosphate dans une poche de fusion,
refroidissement de la scorie fondue contenant de l'oxyde de fer et du phosphate dans des conditions oxydantes pour former de la magnétite solide, en particulier de la magnétite en configuration spinelle, le refroidissement étant régulé de telle sorte qu'une plage de température de 1600°C à 1420°C soit traversée sur une période de 5 minutes à 25 minutes, préférablement de 10 minutes à 20 minutes et très préférablement de 15 minutes,
séparation de la magnétite solide formée lors de l'étape de refroidissement de la scorie contenant du phosphate.

2. Procédé selon la revendication 1, **caractérisé en ce que** le refroidissement est effectué à une basicité (CaO/SiO₂) de 0,5 à 1,2.

3. Procédé selon la revendication 1 ou 2, **caractérisé en ce que** des porteurs d'oxyde de fer sont ajoutés à la scorie fondue contenant de l'oxyde de fer et du phosphate en tant que germes de cristallisation pour la solidification de l'oxyde de fer dans la scorie fondue en magnétite solide.

4. Procédé selon la revendication 1, 2 ou 3, **caractérisé en ce que** le refroidissement de la scorie fondue contenant de l'oxyde de fer et du phosphate s'effectue par introduction d'un gaz de refroidissement, en particulier d'un gaz de refroidissement contenant de l'oxygène, tel que de l'air, du CO₂, de la vapeur d'eau et/ou de l'O₂.

5. Procédé selon la revendication 4, **caractérisé en ce que** le gaz de refroidissement est introduit dans la scorie fondue par une lance.

6. Procédé selon la revendication 4 ou 5, **caractérisé en ce que** le gaz de refroidissement est introduit dans la scorie fondue par une brique poreuse sur ou dans le fond de la poche de fusion.

7. Procédé selon l'une des revendications 1 à 6, **caractérisé en ce que** la magnétite est séparée de la scorie fondue contenant du phosphate par sédimentation dans la poche de fusion et la scorie fondue contenant du phosphate est coulée à l'état liquide.

8. Procédé selon l'une des revendications 1 à 7, **caractérisé en ce que** la magnétite est séparée de la scorie fondue contenant du phosphate par collecte sur un séparateur magnétique et la scorie fondue contenant du phosphate est coulée à l'état liquide.

9. Procédé selon l'une des revendications 1 à 8, **caractérisé en ce que** la scorie fondue contenant du phosphate est solidifiée en scorie contenant du phosphate par introduction d'un gaz de refroidissement, le gaz de refroidissement étant préférablement utilisé après le refroidissement de la scorie contenant du phosphate pour refroidir la scorie fondue contenant de l'oxyde de fer et du phosphate et/ou pour mettre à disposition la scorie fondue contenant de l'oxyde de fer et du phosphate.

10. Procédé selon la revendication 9, **caractérisé en ce que** la solidification de la scorie fondue contenant du phosphate est réalisée par granulation par pulvérisation.

11. Procédé selon la revendication 9 ou 10, **caractérisé en ce que** la scorie contenant du phosphate est broyée et la magnétite éventuellement encore présente est séparée par un séparateur magnétique.

12. Procédé selon la revendication 9, 10 ou 11, **caractérisé en ce que** la scorie contenant du phosphate est aspergée d'acide à des températures comprises entre 100°C et 200°C, préférablement choisi dans le groupe constitué par l'acide phosphorique, l'acide sulfurique et l'acide nitrique.

13. Procédé selon l'une des revendications 1 à 8, **caractérisé en ce que** la scorie fondue contenant du phosphate est réduite pour former du P₂ et la partie scorie est vitrifiée et granulée.
